# EUROPEAN PATENT SPECIFICATION

(11) **EP 0 462 587 B1**
(45) Date of publication and mention of the grant of the patent: **11.12.1996**
(21) Application number: 91110042.8
(22) Date of filing: 18.06.1991
(51) Int. Cl.: G06F 17/30

(54) **Processing method and system for composing file name from alias to real name**
Verarbeitungsverfahren und Gerät um einen Dateinamen von einem logischen zu einem richtigen Namen zu erstellen
Procédé de traitement et système pour composer un nom de fichier en transformant un nom logique en un vrai nom

(30) Priority: 21.06.1990 JP 163156/90
(43) Date of publication of application: 27.12.1991
(73) Proprietor: FUJITSU LIMITED, Kawasaki-shi, Kanagawa 211 (JP)
(72) Inventor: Hayashi, Hiroya, Shizuoka 410-03 (JP)
(74) Representative: Seeger, Wolfgang, Dipl.-Phys.

(56) References cited:
- PATENT ABSTRACTS OF JAPAN vol. 12, no. 276 (P-737)30 July 1988 & JP-A-63 055 669
- RD256034, DERWENT WPIL , AN: 85-227902 WEEK 8537 , 10 August 1985, ( ANONYMOUS )

## Description

### BACKGROUND OF THE INVENTION

### (1) Field of the Invention

In a file system wherein directories each managing at least one subordinate directory, other directories each managing at least one file, and the files constitute a tree structure, the present invention relates to a processing method and a system for composing a file name from an alias to a real name. In this, the alias is a file name which is added conveniently in accordance with a searching route when the file is searched for. The real name is the proper name. In an information processing system, because of the necessity of the access control, it is necessary to know the file access history as an access log. At that time, to avoid confusion, the real name must be used.

### (2) Description of the Related Art

In this technical field, it is called name resolution to find a position in a storage data medium in the designated file. In the directories and files which are constituted as a tree structure and which files are in the most subordinate position, the file is designated a name which is constituted with sequential names from the highest root directory to the lowest file. The designated name consists of the alias name and the real name. The name resolution is carried out by using the designated name.

The directory stores the name of the subordinate directory or the name of the file and an internal name in a pair. In this, the internal name designates the storing position of the hardware. A space-management tables stores the internal name and a storing position in a pair. These are explained hereinafter with reference to the drawings.

If the designated name is the only one for a file, the designated name is equal to the real name. The real name can be output as an access log, and by the access log, an access monitor can be carried out.

But, sometimes, a file has a plurality of designated names. For example, initially, the file is named '/a/b/c/' and after that, the same file is sometimes named '/x/y/z'. Where, for example, the left end slanted line means the root directory, x is a character of the subordinate directory's name, the next slanted line means partition, y is a character of the subordinate directory's name, the next slanted line means partition, and z is the name of the file. In this case, not withstanding the real name '/a/b/c' or the alias name '/x/y/z' shows an identical file, the two different files are designated in the access log. The file cannot be defined by one name.

### SUMMARY OF THE INVENTION

An object of present invention is to compose and output a predetermined file name, in spite of accessing by either one or a plurality of designated names showing a file when the access history of the file is output.

According to an aspect of the present invention, there is provided a processing method for composing a file name from an alias to a real name in a file system, comprising a tree structure including at least one directory 10-0, 10-1 which manages subordinate directories, and files 10-3 each of which is managed by one of the directories, and wherein each file is named by a designated name comprising an alias and a real name. The designated name is constituted of a sequentially arranged set of names of the related directories and the file, and each directory 10-0, 10-1 stores a name F of the subordinate directory or the subordinate file and a corresponding internal name N thereto in a pair; characterized in that the method comprises steps of storing the internal name and a real name corresponding thereto in a pair, examining the real names corresponding to the alias F of the directories 10-0, 10-1 and the file 10-3 which constitutes the designated name, and composing the real name of the file.

According to another aspect of the present invention, there is provided a system for composing a file name from an alias to a real name, comprising a tree structure including at least one directory 10-0, 10-1 which manages subordinate directories, and files 10-3 each of which is managed by one of the directories, and wherein each file is given a designated name comprising an alias and a real name, the designated name being constituted of a sequentially arranged set of names of the related directories and the file, and each directory 10-0, 10-1, stores a name F of the subordinate directory or the subordinate file and a corresponding internal name N thereto in a pair, characterized in that the system comprises a space-management table 20 for storing the internal name N which designates a storing position therein; a stored position S in a storing medium of the directories 10-0, 10-1 or the file 10-3 corresponding to the internal name N; and a real name R as a set.

Other features and advantages of the invention will be apparent from the following description with reference to the accompanying drawings.

### BRIEF DESCRIPTION OF THE DRAWINGS

Figure 1 shows an example of a file system for explaining related arts according to this invention;
Fig. 2 shows an example of the file system for explaining a principle of this invention;
Fig. 3 shows an embodiment of the file system having a tree structure;
Fig. 4 consists of Fig. 4A and Fig. 4B and is an explanatory diagram showing a processing method for composing a file name from an alias to a real name according to the embodiment of this invention; and
Fig. 5 is an explanatory diagram showing a change of information of a space-management table in the system executing this invention.

### DESCRIPTION OF THE PREFERRED EMBODIMENTS

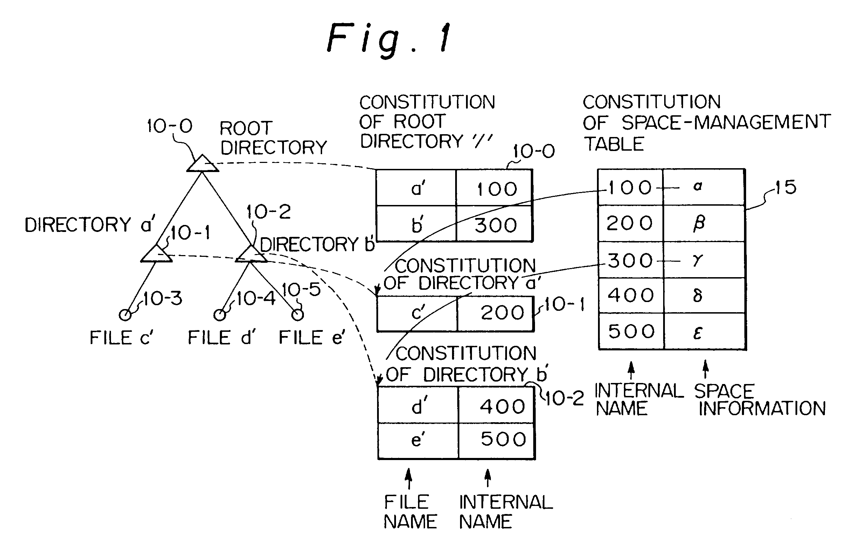

Prior to the explanation of an embodiment of this invention, the related arts are explained with reference to Fig. 1.

In Fig. 1 a method of name resolution is explained. In the figure, reference numerals 10-0 to 10-2 denote directories, 10-3 to 10-5 denote files, and 15 denotes a space-management table.

The file 10-3 is designated by a designated name ('/a'/c'') attached in the front of the file name (e.g., c'). The first slanted line/indicates the root directory 10-0, a' is a name of the directory a' 10-1, the second slanted line indicates a partition, and c' is the file name. The designated name may be longer in accordance with the tree structure. The name resolution is to obtain a position of the designated file in a storing medium.

The directories 10-0 to 10-2 store at least one pair of the subordinate directory or file and an internal name (e.g. 100, 200, 300 or the like).

The space-management table 15 stores pairs of the internal name and the storing position.

When name resolution is executed, the internal names are examined with reference to directories having the name as indicated in the designated name, and storing positions of the directories or file corresponding to the internal name by the space management table. Then, the above process is repeated.

For example, in the case when the designated name of the file 10-3 is '/a'/c'', the name resolution is explained as follows. The first slanted line '/' shows the root directory 10-0 and the following '/' is only a partition mark.

First, the directory 10-0 shown by '/' is searched for and the internal name '100' corresponding to 'a'' which is located next to the mark '/' is acquired. Then, the space-management table 15 is searched for and the storing position α corresponding to the internal name '100' is acquired. Thus the obtained directory a' which is stored in the position α is searched for by the name 'c'' which is located after 'a'' in the designated name and the internal name '200' is acquired. Then, with reference to the space-management table, the storing position β corresponding to the internal name '200' is acquired, and the contents of the file 10-3 is stored in the storing position β. If only one designated name of the file exists, the designated name is used for the access log and the file name to be monitored is unified.

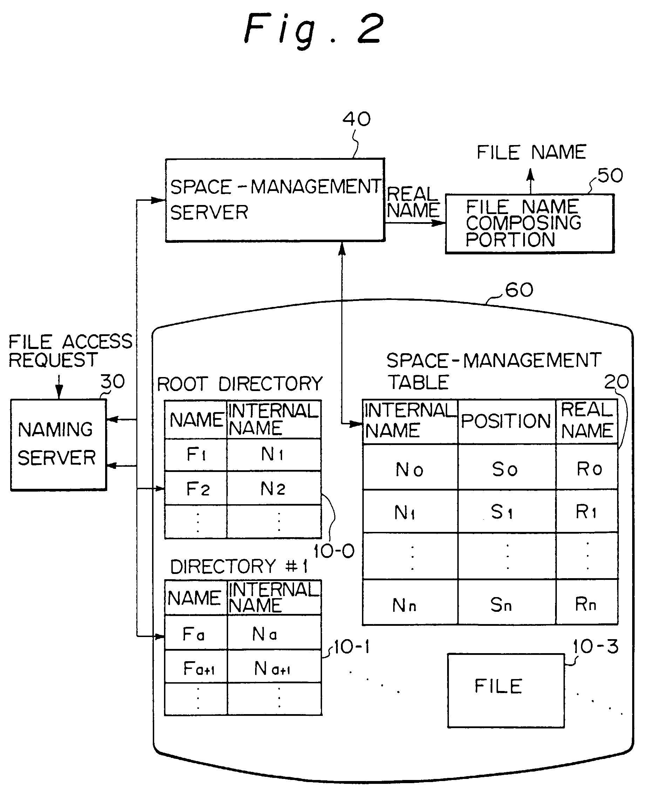

Next, the present invention is explained with reference to Fig. 2.

In the figure, reference numeral 10-0 denotes a root directory, 10-1 denotes a directory #1, 10-3 denotes a file #n, 20 denotes a space-management table, 30 denotes a naming server, 40 denotes a space-management server, 50 denotes a file name composing portion, F₁, F₂ or the like denote names of the directories or files, No to Nn denote internal names of the directories or files, So to Sn denote positions of the directories or files in the storing medium, and Ro to Rn denote real names of the directories or files.

The directory 10-0, for example, stores F₁ and N₁ in a pair and F₂ and N₂ in a pair, where F₁ and F₂ are names of the directories 10-1 or the like managed by the directory 10-0.

The space-management table 20 stores the internal names No to Nn, the storing positions So to Sn and the real names Ro to Rn in sets of No, So, Ro; N₁, S₁, R₁;...; Nn, Sn, Rn.

The naming server 30 informs the file space-management server 40 of the internal name N by examining the internal name N corresponding to the name F of the directory or file located just after one of the directories in the designated name, with reference to the predetermined directory 10-0 if the file access is requested, or with reference to one of the other directories stored in the storing position S if the file space-management server 40 informs the storing position S. Where N, F and S denote one of No to Nn, F₁ to F₂ or the like, and So to Sn, respectively.

The file space management server 40 receives the internal name N from the naming server 30, the storing position S and the real name R corresponding to the internal name N is examined with reference to the space management table 20, the naming server 30, is informed of the storing position S and the file name composing portion 50 is informed of the real name R.

The file name composing portion 50 composes all the real names informed from the space-management server 40 until the file access is completed and outputs the information as an access log. Similarly where R denotes one of Ro to Rn.

Since the file 10-3 requested for access is designated by the designated name wherein the names of the concerning directories 10-0 to 10-1 are located from a higher rank to a lower rank in front of the name of the file 10-3, the process is carried out following the designated names.

For example, it is assumed that the access request with the designated name '/Fx/Fy/Fz' is applied.

The naming server 30 informs the space-management server 40 of the access request. The space-management server 40 receiving the information examines the storing position So of the root directory 10-0 and the real name Ro with reference to the space-management table 20, informs the naming server 30 of the storing position So, and informs the file name composing portion 50 of the real name Ro. Then, the naming server 30 searches for the root directory 10-0 stored in the above storing position So, acquires the internal name N corresponding to the name F, and transmits the internal name N to the space-management server 40. The space-management server 40 receiving the internal name N obtains the storing position S and the real name R corresponding to the internal name N with reference to the space-management table 20, informs the naming server 30 of the storing position S, and informs the file name composing portion 50 of the real name R. Subsequently, for other F's similar processing is carried out and other R's corresponding to F's, respectively, can be obtained. The file name composing portion 50 composes thus obtained R's (e.g., Ro, Rx, Ry, Rz) and the file name '/Ro/Rx/Ry/Rz' is composed.

Namely, by outputting a file name composed from the real names, a single file name determined for a special file can be output.

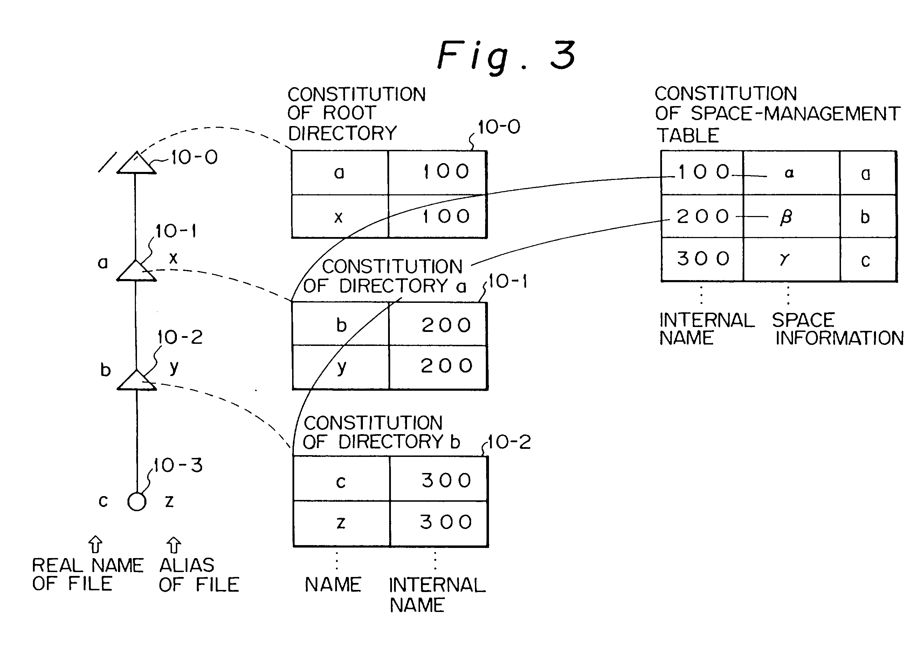

In Fig. 3, an example of the file system having a tree structure is shown. The directory 10-0 manages the directory 10-1, the directory 10-1 manages the directory 10-2, and the directory 10-2 manages the file 10-3. The directory 10-1 is named a and x, the directory 10-2 is named b and y and the file 10-3 is named c and z. The names a, b, and c were initially called proper names, but the names x, y, and z were named after that, namely, alias.

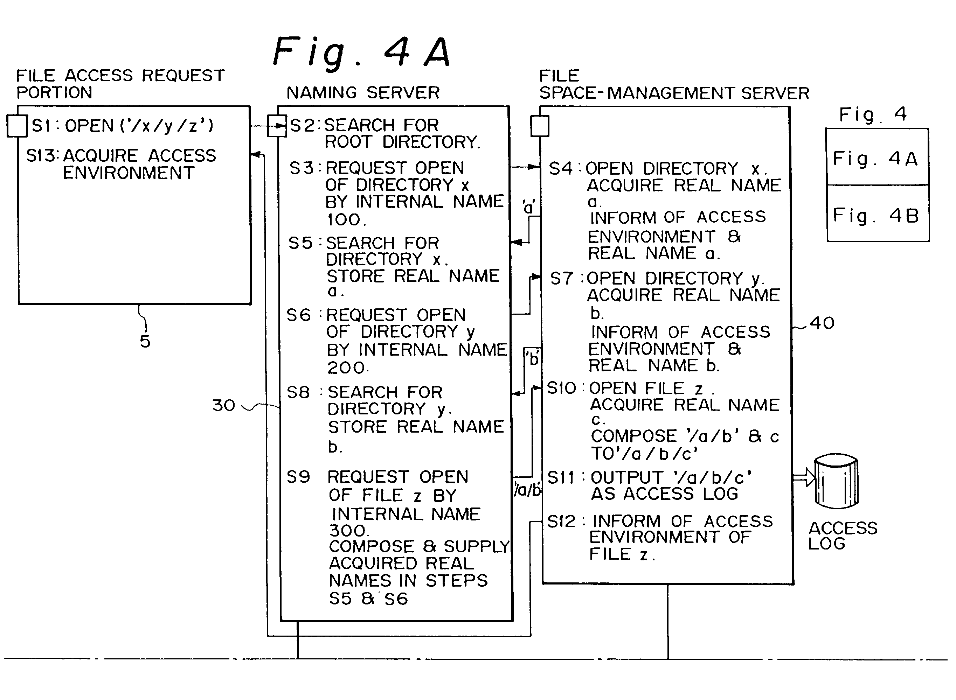

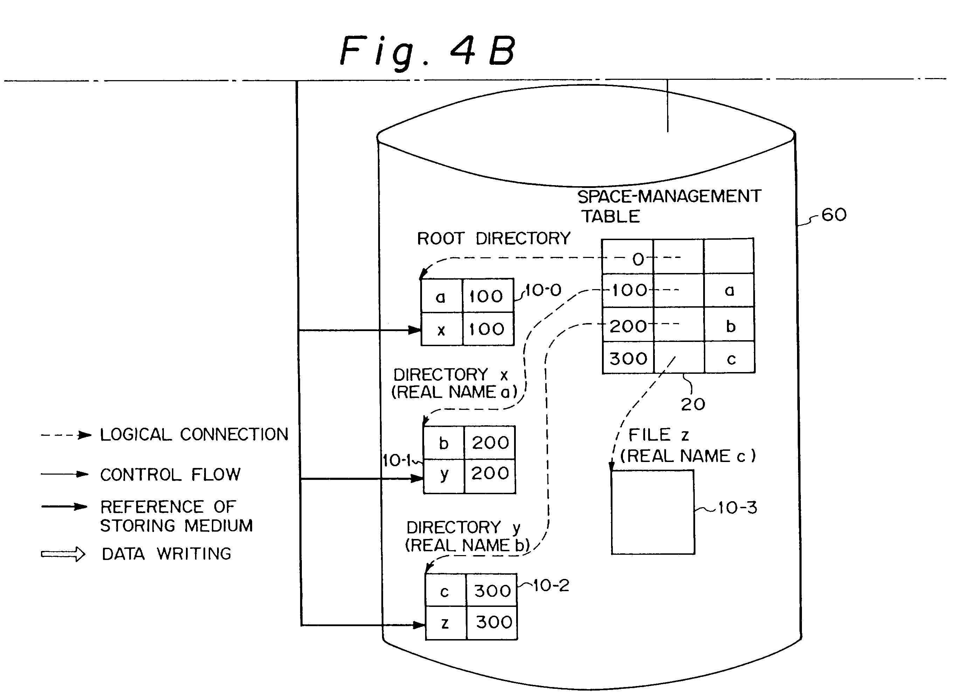

In Fig. 4, which consists of Figs. 4A and 4B, an embodiment of a processing method for composing a file name from an alias to a real name using the file system in Fig. 3 is shown. In Fig. 4, the reference numeral 5 denotes a file access request portion, 60 denotes a storing medium, 10-0 to 10-3 denotes the same numbered elements in Fig. 3, 20 denotes the same numbered element in Fig. 2. A directory searching in this embodiment is a portion of the function of the file name composing portion 50 in Fig. 2 and the function of the naming server 30, and the space-management table searching is a portion of the function of the file name composing portion 50 and the function of the file space-management server 40.

In the case when an access request is applied to the file 10-3 using the designated name '/x/y/z', the explanation is executed with reference to Fig. 4. S1, S2, S3, ... or the like corresponds to the S1, S2, S3, ... or the like in Fig. 4 and these numbers show the order of the processing.
S1: An application program requests a file open by using an alias '/x/y/z'. (file access request)
S2: A root directory is searched for by using the file name 'x' as a key. As a result, an internal name '100' corresponding to the file name 'x' is acquired. (naming server)
S3: The file space-management server is requested to open the file space corresponding to the internal name '100'. (naming server)
S4: The space-management table is searched for by using the internal name '100' as a key, the space information corresponding to the internal name '100' is acquired, the corresponding file is opened, and an access environment is supplied to the naming server.
At this time, the file name 'a', which is initially named, is supplied to the naming server. (file space-management server)
S5: The directory 'x' is accessed by using the access environment acquired from the space-management server, and the directory 'x' is searched for by using the file name 'y' as a key. As a result, the internal name '200' corresponding to the file name 'y' is acquired.
At this time, the file name 'a' acquired from the file space-management server is stored. (naming server)
S6: The opening of the file space corresponding to the internal name '200' is requested of the file space-management server. (naming server)
S7: The space-management table is searched for by using the internal name '200' as a key, the space information corresponding to the internal name '200' is acquired, the file corresponding to the space information is opened, and the access environment is supplied to the naming server.
At this time, the file name 'b' which is named at file creation is acquired, and the file name 'b' is supplied to the naming server. (file space-management server)
S8: The directory 'y' is accessed by using the access environment which is acquired from the space-management server, and the directory 'y' is searched for by using the file name 'z' as a key. As a result, the internal name '300' corresponding to the file name 'z' is acquired.
   At this time, the file name '/a/b' is composed from the file name 'a' acquired by the process step S5 and from the file name 'b' acquired from the file space-management server. (naming server)
S9: The opening of the file space corresponding to the internal name '300' is requested of the file space-management server. At this time, the file name 'a/b' composed at the processing steps S5 and S8 is supplied to the space-management server. (naming server)
S10: The space-management table is searched for by using the internal name '300' as a key, the space information corresponding to the internal name '300' is acquired, and the file corresponding to the space information is opened.
   At this time, the file name 'c' which is named at the file creation is acquired, and the file name '/a/b/c' (being a name at file creation) is composed from the file name '/a/b' supplied from the naming server and the file name 'c'. (file space-management server)
S11: The composed file name '/a/b/c' is output as an access log. (file space-management server)
S12: The file environment which is opened is supplied to the access request portion through the naming server. (file space-management server)
S13: The proper access environment is constituted based on the access environment supplied from the naming server. (access request portion)

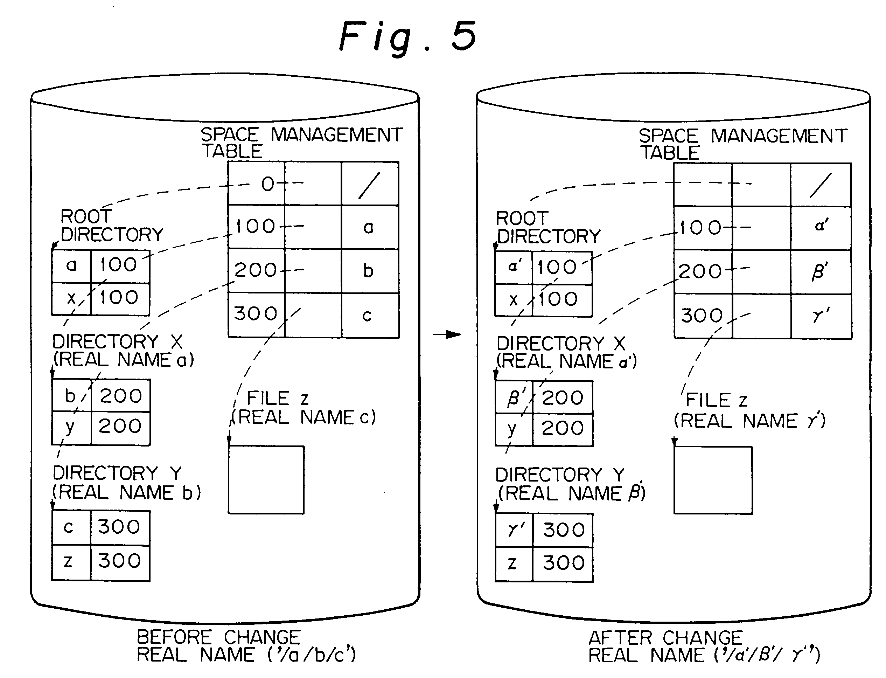

In Fig. 5, the processing in the storing information of the directories and the space-management table is shown, in the case when the file name at the file creation (i.e., real name) changes to 'α'/β'/γ''' from 'a/b/c/'.

When the real name is changed, the information of file name in the space-management table is changed in response to the change of the real name, when the file is accessed by using alias '/x/y/z' after the change of the real name, the real name 'α'/β'/γ'' can be composed as a real name after the change of the file name.

## Claims

1. A processing method for composing a file name from an alias to a real name in a file system, comprising a tree structure including at least one directory (10-0, 10-1) which manages subordinate directories and files (10-3) each of which is managed by one of the directories, and wherein each file is named by a designated name comprising an alias and a real name, both the alias and the real name being constituted of a sequentially arranged set of names of the related directories and the file, and each directory (10-0, 10-1) stores a name (F) of the subordinate directory or the subordinate file and a corresponding internal name (N) thereto in a pair; the file system further comprising a space-management table for storing the internal name (N) which designates a storing position therein and a stored position (S) in a storing medium of the directories or the file corresponding to the internal name (N), the processing method being characterized in that it comprises the steps of:
storing in addition to each internal name and stored position in the space-management table the real name corresponding to the internal name,
identifying the internal names corresponding to the alias names ,
identifying in the space-management table the real names corresponding to the internal names, and
composing the real name of the file.

2. A processing method as set forth in claim 1, wherein when the real name of the file has been changed, the real name stored with the internal name in a pair before the name change is changed in response to that change.

3. A system for composing a file name from an alias to a real name, comprising a tree structure including at least one directory (10-0, 10-1) which manages subordinate directories and files (10-3) each of which is managed by one of the directories, and wherein each file is named by a designated name comprising an alias and a real name, both the alias and real name being constituted of a sequentially arranged set of names of the related directories and the file, and each directory (10-0, 10-1) stores a name (F) of the subordinate directory or the subordinate file and a corresponding internal name (N) thereto in a pair, the system further comprising a space-management table for storing the internal name (N) which designates a storing position therein and a stored position (S) in a storing medium of the directories or the file corresponding to the internal name (N), the system being characterized in that it comprises
storage space in the space-management table to store in addition to each internal name and stored position the real name corresponding to the internal name,
means to identify the internal names corresponding to the alias names,
means to identify in the space-management table the real names corresponding to the internal names, and
means to composing the real name to the file.

4. A system as set forth in claim 3, further comprising:
a naming server (30),
a file name composing portion (50),
a space-management server (40);
the naming server (30) sending access request information to the file space-management server (40) when the file access is requested;
when the file space-management server (40) informs the storing position (S), with reference to the directory stored in the storing position (S), the naming server (30) examining the internal name (N) corresponding to a name (F) located subsequent to the name of the directory in the designated name; the naming server (30) informing the file space-management server (40) of the internal name (N);
when the file access is requested, the file space-management server (40) examining the storing position (So) and the real name (Ro) of the predetermined directory (10-0) with reference to the space-management table (20); the file space-management server (40) informing the naming server (30) of the storing position (So) and informing the file name composing portion (50) of the real name (Ro); when the internal name (N) is supplied, the file space-management server (40) examining the storing position (S) and the real name (R) corresponding to the internal name (N) with reference to the space-management table (20); the space-management server (40) informing the naming server (30) of the storing position (S) and informing the file name composing portion (50) of the real name (R); and
the file name composing portion (50) composing the real name (R) obtained form the space-management server (40) and the composed file name being obtained.

5. A system as set forth in claim 3 or 4, wherein when the real name has been changed, the real name stored in the space-management table (20) is changed in response to that change.

## Patentansprüche

1. Ein Verarbeitungsverfahren zum Zusammensetzen eines Dateinamens von einem Alias zu einem wirklichen Namen in einem Dateisystem, umfassend eine Baumstruktur, die zumindest ein Verzeichnis (10-0, 10-1), das untergeordnete Verzeichnisse verwaltet, und Dateien (10-3) enthält, von denen jede durch eines der Verzeichnisse verwaltet wird, und worin jede Datei durch einen einen Alias und einen wirklichen Namen umfassenden bezeichneten Namen benannt ist, wobei sowohl der Alias als auch der wirkliche Name aus einem sequentiell angeordneten Satz von Namen der zugehörigen Verzeichnisse und der Datei gebildet sind, und jedes Verzeichnis (10-0, 10-1) einen Namen (F) des untergeordneten Verzeichnisses oder der untergeordneten Datei und einen entsprechenden internen Namen (N) dazu in einem Paar speichert; wobei das Dateisystem ferner eine Platzverwaltungstabelle enthält, um den internen Namen (N), der eine Speicherposition darin bezeichnet, und eine gespeicherte Position (S) in einem Speichermedium der Verzeichnisse oder der Datei zu speichern, die dem internen Namen (N) entspricht, wobei das Verarbeitungsverfahren dadurch gekennzeichnet ist, daß es die Schritte umfaßt:
Speichern, zusätzlich zu jedem internen Namen und jeder gespeicherten Position in der Platzverwaltungstabelle, des wirklichen Namens, der dem internen Namen entspricht,
Identifizieren der internen Namen, die den Aliasnamen entsprechen,
Identifizieren, in der Platzverwaltungstabelle, der wirklichen Namen, die den internen Namen entsprechen, und
Zusammensetzen des wirklichen Namens der Datei.

2. Ein Verarbeitungsverfahren nach Anspruch 1, worin, wenn der wirkliche Name der Datei geändert worden ist, der mit dem internen Namen in einem Paar vor der Namensänderung gespeicherte wirkliche Name als Antwort auf die Änderung geändert wird.

3. Ein System zum Zusammensetzen eines Dateinamens von einem Alias zu einem wirklichen Namen, umfassend eine Baumstruktur, die zumindest ein Verzeichnis (10-0, 10-1), das untergeordnete Verzeichnisse verwaltet, und Dateien (10-3) enthält, von denen jede durch eines der Verzeichnisse verwaltet wird, und worin jede Datei durch einen einen Alias und einen wirklichen Namen umfassenden bezeichneten Namen benannt ist, wobei sowohl der Alias als auch der wirkliche Name aus einem sequentiell angeordneten Satz von Namen der verwandten Verzeichnisse und der Datei gebildet sind, und jedes Verzeichnis (10-0, 10-1) einen Namen (F) des untergeordneten Verzeichnisses oder der untergeordneten Datei und einen entsprechenden internen Namen (N) dazu in einem Paar speichert, wobei das System ferner eine Platzverwaltungstabelle umfaßt, um den internen Namen (N), der eine Speicherposition darin bezeichnet, und eine gespeicherte Position (S) in einem Speichermedium der Verzeichnisse oder der Datei entsprechend dem internen Namen (N) zu speichern, wobei das System dadurch gekennzeichnet ist, daß es umfaßt
einen Speicherplatz in der Platzverwaltungstabelle, um zusätzlich zu jedem internen Namen und jeder gespeicherten Position den dem internen Namen entsprechenden wirklichen Namen zu speichern,
ein Mittel, um die den Aliasnamen entsprechenden internen Namen zu identifizieren,
ein Mittel, um in der Platzverwaltungstabelle die den internen Namen entsprechenden wirklichen Namen zu identifizieren, und
ein Mittel, um den wirklichen Namen der Datei zusammenzusetzen.

4. Ein System nach Anspruch 3, ferner umfassend:
einen Namensgebungsserver (30),
einen einen Dateinamen zusammensetzenden Teil (50),
einen Platzverwaltungsserver (40);
wobei der Namensgebungsserver (30) eine Zugriffsanforderungsinformation an den Dateiplatzverwaltungsserver (40) schickt, wenn der Dateizugriff angefordert wird;
wenn der Platzverwaltungsserver (40) die Speicherposition (S) mitteilt, mit Bezugnahme auf das in der Speicherposition (S) gespeicherte Verzeichnis, der Namensgebungsserver (30) den internen Namen (N) prüft, der einem Namen (F) entspricht, der sich hinter dem Namen des Verzeichnisses in dem bezeichneten Namen befindet; der Namensgebungsserver (30) den Dateiplatzverwaltungsserver (40) über den internen Namen (N) informiert;
wenn der Dateizugriff angefordert wird, der Platzverwaltungsserver (40) die Speicherposition (So) und den wirklichen Namen (Ro) des vorbestimmten Verzeichnisses (10-0) mit Bezugnahme auf die Platzverwaltungstabelle (20) prüft; der Platzverwaltungsserver (40) den Namensgebungsserver (30) über die Speicherposition (So) informiert und den Dateinamen zusammensetzenden Teil (50) über den wirklichen Namen (Ro) informiert; wenn der interne Name (N) geliefert wird, der Dateiplatzverwaltungsserver (40) die Speicherposition (S) und den wirklichen Namen (R) entsprechend dem internen Namen (N) mit Bezugnahme auf die Platzverwaltungstabelle (20) prüft; der Platzverwaltungsserver (40) den Namensgebungsserver (30) über die Speicherposition (S) informiert und den Dateinamen zusammensetzenden Teil (50) über den wirklichen Namen (R) informiert; und
der Dateinamen zusammensetzende Teil (50) den wirklichen Namen (R), der von dem Platzverwaltungsserver (40) erhalten wurde, zusammensetzt und der zusammengesetzte Dateiname erhalten wird.

5. Ein System nach Anspruch 3 oder 4, worin, wenn der wirkliche Name geändert worden ist, der in der Platzverwaltungstabelle (20) gespeicherte wirkliche Name als Antwort auf die Änderung geändert wird.

## Revendications

1. Procédé de traitement pour composer un nom de fichier en transformant un nom logique en un vrai nom dans un système de fichiers, comprenant une structure d'arbre comprenant au moins un répertoire (10-0, 10-1) qui gère des répertoires subordonnés et des fichiers (10-3) dont chacun est géré par l'un des répertoires, et dans lequel chaque fichier est nommé par un nom désigné comprenant un nom logique et un nom réel, le nom désigné étant constitué d'un jeu disposé séquentiellement de noms de répertoires liés et d'un fichier, et chaque répertoire (10-0, 10-1) stocke un nom (F) du répertoire subordonné ou du fichier subordonné et un nom interne correspondant (N) à celui-ci dans une paire ;
caractérisé en ce que le procédé comprend les étapes de :
stockage du nom interne et du nom réel correspondant à celui-ci dans une paire,
examen des noms réels correspondant aux noms logiques (F) des répertoires (10-0, 10-1) et du fichier (10-3) qui constitue le nom désigné, et
composition du nom réel du fichier.

2. Procédé de traitement selon la revendication 1, dans lequel lorsque le nom réel du fichier a été changé, le nom réel stocké avec le nom interne dans une paire avant que le nom change, est changé en réponse à ce changement.

3. Système pour composer un nom de fichier en transformant un nom logique en un nom réel, comprenant une structure d'arbre comprenant au moins un répertoire (10-0, 10-1) qui gère des répertoires subordonnés et des fichiers (10-3) dont chacun est géré par l'un des répertoires, et dans lequel chaque fichier est nommé par un nom désigné comprenant un nom logique et un nom réel, à la fois les nom logique et réel étant constitués d'un jeu disposé séquentiellement de noms de répertoires liés et d'un fichier, et chaque répertoire (10-0, 10-1) stocke un nom (F) de répertoire subordonné ou de fichier subordonné et un nom interne correspondant (N) à celui-ci dans une paire, le système comprenant en outre une table de gestion d'espace pour stocker le nom interne (N) qui désigne une position de stockage dans celle-ci et une position stockée (S) dans un support de stockage des répertoires ou du fichier correspondant au nom interne (N), le système étant caractérisé en ce qu'il comprend
un espace de stockage dans la table de gestion d'espace pour stocker en plus chaque nom interne et la position stockée du nom réel correspondant au nom interne,
un moyen pour identifier les noms internes correspondant aux noms logiques,
un moyen pour identifier dans la table de gestion d'espace les noms réels correspondant aux noms internes, et
un moyen pour composer le nom réel sur le fichier.

4. Système selon la revendication 3, comprenant en outre :
un serveur de dénomination (30),
une partie de composition de nom de fichier (50),
un serveur de gestion d'espace (40) ;
le serveur de dénomination (30) envoyant des informations de demande d'accès au serveur de gestion d'espace de fichier (40) lorsque l'accès au fichier est demandé ;
lorsque le serveur de gestion d'espace de fichier (40) informe la position de stockage (S), en référence au répertoire stocké dans la position de stockage (S), le serveur de dénomination (30) examinant le nom interne (N) correspondant à un nom (F) situé à la suite du nom du répertoire dans le nom désigné ; le serveur de dénomination (30) informant le serveur de gestion d'espace de fichier (40) du nom interne (N) ;
lorsque l'accès de fichier est demandé, le serveur de gestion d'espace de fichier (40) examinant la position de stockage (So) et le nom réel (Ro) du répertoire prédéterminé (10-0) en référence à la table de gestion d'espace (20) ; le serveur de gestion d'espace de fichier (40) informant le serveur de dénomination (30) de la position de stockage (So) et informant la partie de composition de nom de fichier (50) du nom réel (Ro) ; lorsque le nom interne (N) est fourni, le serveur de gestion d'espace de fichier (40) examinant la position de stockage (S) et le nom réel (R) correspondant au nom interne (N) en référence à la table de gestion d'espace (20) ; le serveur de gestion d'espace (40) informant le serveur de dénomination (30) de la position de stockage (S) et informant la partie de composition de nom de fichier (50) du nom réel (R) ; et
la partie de composition de nom de fichier (50) composant le nom réel (R) obtenu du serveur de gestion d'espace (40) et le nom de fichier composé étant obtenu.

5. Système selon la revendication 3 ou 4, dans lequel, lorsque le nom réel a été changé, le nom réel stocké dans la table de gestion d'espace (20) est changé en réponse à celle-ci.
